# EUROPÄISCHE PATENTSCHRIFT

(11) **EP 1 378 701 B1**
(45) Veröffentlichungstag und Bekanntmachung des Hinweises auf die Patenterteilung: **11.10.2006**
(21) Anmeldenummer: 03014787.0
(22) Anmeldetag: 28.06.2003
(51) Int. Cl.: F16L 37/084

(54) **Schnellverbindung zum Verbinden von zwei Rohrenden**
Quick-acting connection for joining two pipe ends
Raccord à action rapide pour l'assemblage de deux extrémités de tubes

(30) Priorität: 03.07.2002 CH 11682002
(43) Veröffentlichungstag der Anmeldung: 07.01.2004
(73) Patentinhaber: EMS Chemie AG, 7013 Domat/Ems (CH)
(72) Erfinder: Jeltsch, Thomas, Dipl.-Ing., 7013 Domat/Ems (CH); Willi, Mario, Dipl.-Ing. ETH, 7013 Domat/Ems (CH); Kettl, Ralph, Dipl.-Ing. FH, 7402 Bonaduz (CH)
(74) Vertreter: Lauer, Joachim

(56) Entgegenhaltungen:
- DE-A- 3 727 858
- GB-A- 1 007 746

## Beschreibung

### TECHNISCHES GEBIET

Die vorliegende Erfindung betrifft eine Schnellverbindung zum dichten und lösbaren Verbinden eines ersten Rohrendes mit einem zweiten Rohrende, mit Federarmen, mit einem ersten äusseren Rastvorsprung am ersten Rohrende, mit einem ersten mit den Federarmen verbundenen elastisch deformierbaren Ring, und mit zwei ersten mit dem ersten äusseren Rastvorsprung zusammenwirkenden inneren Rastnocken an dem ersten Ring.

### STAND DER TECHNIK

Schnellverbindungen dieser Art sind bekannt und werden auch als "Konnektoren" bezeichnet. Zum Einsatz kommen sie z.B. im Automobilbau, wobei sie unter anderem zur Verbindung von Kraftstoffleitungen oder von Luftkanälen dienen. Mit dem Begriff Kanal sind hier geschlossene Leitungen von beliebigem Querschnitt gemeint, insbesondere aber Rohre mit rundem Querschnitt. Regelmässig ist dabei ein Anschluss an ein metallisches oder auch nichtmetallisches Rohr oder einen Ansschlussstutzen erforderlich. Wegen der auftretenden Vibrationen ist es zudem erforderlich, zumindest einen Teil der Leitung bzw. des Kanals elastisch nachgiebig auszubilden. Hierfür werden zumeist Gummischläuche verwendet. Wegen ihres insbesondere bei grossvolumigen Luftkanälen hohen Gewichts und hohen Preises sind Gummischläuche jedoch nicht sehr vorteilhaft und werden bereits mit leichteren und billigeren Kunststoffrohren kombiniert, die wiederum jedoch relativ steif sind. Auch zur Verbindung der Kunststoffrohre mit den Gummischläuchen werden Konnektoren benötigt. Insgesamt ergibt sich so ein relativ komplizierter Aufbau mit mehreren Abschnitten aus unterschiedlichen Materialien und mehreren Konnektoren zwischen den Abschnitten. Dies wiederum bedingt einen hohen Herstellungsaufwand, einen hohen Aufwand für die Logistik sowie einen hohen Montageaufwand. Der mehrteilige Aufbau kommt auch der Dichtigkeit der Leitung nicht zugute und erzwingt eine gewisse Mindestlänge, da die einzelnen Bauteile nicht beliebig kurz ausgebildet werden können. Auch muss unter den beengten Verhältnissen, wie sie im Motorraum von Automobilen heute zumeist vorliegen, ausreichend Platz für die Zugänglichkeit der einzelnen Konnektoren vorgesehen werden.

Bei einer aus der DE 37 27 858 C2 oder der DE 38 43 995 C2 bekannten und für Kraftstoffleitungen eingesetzten Schnellverbindung der eingangs genannten Art sind die Federarme mit ihren einen Enden an dem zweiten Rohrende festgelegt und mit ihrem jeweils anderen Ende mit dem ersten elastisch deformierbaren Ring verbunden. In diesem Bereich sind an dem Ring auch jeweils die ersten inneren Rastnocken ausgebildet. Der Ring mit den Rastnocken sowie die beiden Federarme sind mit dem zweiten Rohrende einstückig ausgebildet, welches ingesamt als Kunststoff-Spritzgussteil hergestellt ist. Zum Anschluss eines Schlauchs ist das zweite Rohrende noch mit einem entsprechenden Anschlussstutzen versehen.

Bei einer aus der EP 0 750 152 B1 bekannten Steckverbindung insbesondere zur Verbindung von Gummischläuchen mit Metall- oder Kunststoffrohren werden die beiden als Innen- und Aussenhülse bezeichneten Rohrenden durch eine u-förmig gebogene Rastfeder gesichert. Diese greift mit ihren beiden Armen von der Seite her durch Öffnungen in der Aussenhülse und in Aussennuten an der Innenhülse ein. Bei dieser Lösung ist mit der Rastfeder ein extra Teil vorhanden, welches zum Herstellen der Verbindung zur Hand sein und zum Lösen der Verbindung von den übrigen Verbindungselementen ganz getrennt werden muss. Wegen des seitlichen Eingriffs der Rastfeder muss relativ viel Platz zum Herstellen und Lösen der Verbindung vorgesehen werden.

Aus der JP 11201356 ist eine Schnellverbindung zum lösbaren Verbinden eines ersten Rohrendes mit einem zweiten Rohrende bekannt. An dem zweiten Rohrende ist zwischen zwei Wülsten ein das zweite Rohrende eng umschliessendes und dadurch nicht deformierbares Ringelement fest vormontiert, welches mit vier abstehenden Federarmen versehen ist. An den freien Enden der Federarme sind jeweils innere Rastnocken vorhanden, die mit einem äusseren Rastvorsprung am ersten Rohrende zusammenwirken.

Die WO 99/34143 zeigt ebenfalls eine Lösung mit einem am zweiten Rohrende festgelegten Ringelement, bei welcher jedoch die Federarme des Ringelements von innen nach aussen in Aussparungen des ersten Rohrendes einschnappen, welches das zweite Rohrende dazu teilweise mit Abstand übergreift. Das zweite Rohrende ist flexibel ausgebildet und durch Extrusionsblasformen hergestellt.

### DARSTELLUNG DER ERFINDUNG

Die Erfindung stellt sich die Aufgabe, eine Schnellverbindung der eingangs genannten Art anzugeben, welche bewährte Vorteile von vorbekannten Lösungen übernimmt, einfach und rationell herstellbar ist, funktionell erweitert ist und kompakte Leitungsverbindungen ermöglicht.

Die Schnellverbindung nach der Erfindung ist gemäss Patentanspruch 1 gekennzeichnet durch einen zweiten äusseren Rastvorsprung am zweiten Rohrende, einen zweiten mit den Federarmen mit Abstand vom ersten Ring verbundenen elastisch deformierbaren Ring, und durch zwei zweite mit dem zweiten äusseren Rastvorsprung zusammenwirkende innere Rastnocken an dem zweiten Ring.

Durch die Schnellverbindung nach der Erfindung werden insbesondere die folgenden Vorteile erreicht:

Sie lässt sich durch einfaches Zusammenführen der beiden Rohrenden mit selbsttätigem Einschnappen der Rastnocken herstellen.

Es wird eine für den Fluid-Einsatz (Flüssigkeiten, Dämpfe oder Gase) dichte Verbindung (im praktischen Sinne) erreicht.

Zum Lösen der Verbindung muss nur einer der beiden Ringe durch gegensinnigen Druck zwischen den Rastnocken zusammengedrückt und dadurch die an ihm im Bereich der Federarme angeformten inneren Rastnocken ausser Eingriff mit dem von ihnen jeweils umgriffenen Rastvorsprung gebracht werden. Alternativ ist das Spreizen der Federarme oder des Rings mit einem geeigneten Werkzeug möglich. Danach genügt ein leichtes Ziehen in Axialrichtung der Verbindung.

Die Verbindung ist zumindest im wesentlichen symmetrisch und kann dadurch beidseitig, d.h. am einen oder am anderen Rohrende gelöst werden. Gegenüber den aus dem Stand der Technik bekannten Lösungen ist sie dadurch funktionell verdoppelt. Vorteilhaft ist dies vor allem bei beengten Platzverhältnissen, wie sie im Motorraum von Automobilen heute regelmässig anzutreffen sind.

Die beiden Ringe mit ihren inneren Rastnocken und die beiden Federarme bilden ein von beiden Rohrenden trennbares Doppel-Verbindungs-Element, welches mit beiden Rohrenden auch nur aussenseitig in Berührung und Eingriff kommt. Insofern besteht grosse Wahlfreiheit hinsichtlich des für das Doppel-Verbindungs-Element verwendeten Materials, das unabhängig von den für die beiden Rohrenden verwendeten Materialien und damit ohne Berücksichtigung des in den Rohrenden transportierten Mediums gewählt werden kann.

Das Doppel-Verbindungs-Element kann in Axialrichtung verhältnismässig kurz ausgebildet werden. Da die axiale Länge der gesamten Schnellverbindung im wesentlichen durch die Länge des Doppel-Verbindungs-Elements bestimmt wird, wird auch diese sehr kurz und kompakt.

Das Doppel-Verbindungs-Element kann kostengünstig insbesondere einstückig als Kunststoff-Spritzgussteil hergestellt werden, wobei sich seine möglichen geringen Abmessungen als vorteilhaft erweisen. Weiter von Vorteil ist die erwähnte grosse Wahlfreiheit bezüglich des verwendeten Materials. Als geeignetes spritzgussfähiges Kunststoff-Material für das Doppel-Verbindungs-Element kommen technische Polymere generell in Frage. Geeignet sind vor allem verstärkte Polyamide. Dabei sind Polyamid 6, Polyamid 66, Polyamid 46, Polyamid 11, Polyamid 12, sowie partiell aromatische teilkristalline Copolyamide (Polyphthalamide) bevorzugt.

Beim Verstärkungsmittel für das Polyamid kann es sich um Fasern und/oder Mineralien (z.B. Glimmer) handeln. Für eine Faserverstärkung sind z.B. Glasfasern, Kohlenstofffasern oder Aramidfasern geeignet, wobei Glasfasern bevorzugt sind.

Gemäss einer weiteren bevorzugten Ausbildung der Erfindung sind parallel und mit Abstand zu den ersten inneren Rastnocken am ersten Ring unter Ausbildung einer Eingriffsvertiefung für den ersten äusseren Rastvorsprung am ersten Rohrende zwei weitere innere Rastnocken vorgesehen. Das Doppel-Verbindungs-Element 30 kann dadurch am ersten oder am zweiten Rohrende vormontiert und beispielsweise zusammen mit diesem ausgeliefert, transportiert, gelagert und endmontiert werden. Es muss zum Herstellen und Lösen der Verbindung nicht von dem entsprechenden Rohrende abgenommen werden. Es stellt insofern kein loses, separates Teil der Verbindung dar.

Wie bei den vorbekannten Verbindungen an sich üblich können auch bei der erfindungsmässen Verbindung die beiden Rohrenden ineinander steckbar ausgebildet sein. Hierbei kann insbesondere ein Endabschnitt des zweiten Rohrendes zur Aufnahme eines Endabschnittes des ersten Rohrendes stufig erweitert sein, wobei die stufige Erweiterung gerade als zweiter äusserer Rastvorsprung verwendet werden kann. Natürlich könnte auch ein extra Wulst oder eine extra Rippe als äusserer Rastvorsprung dienen (so wie beim ersten Rohrende).

Die Dichtigkeit der Schnellverbindung kann z.B. dadurch erreicht werden, dass der Endabschnitt des zweiten Rohrendes innenseitig mit einer Dichtfläche und der Endabschnitt des ersten Rohrendes aussenseitig mit mindestens einer umlaufenden Dichtnut für mindestens ein Dichtungselement, z.B. eine O-Ring-Dichtung vorgesehen wird. Beim Zusammenstecken der beiden Rohrenden dichtet dieses mindestens eine Dichtungselement dann ohne weitere Massnahmen gegen die genannte Dichtfläche am zweiten Rohrende. Beim Dichtungselement kann es sich z.B. auch um eine Dichtschnur oder eine Lippendichtung handeln.

Mit besonderem Vorteil kann bei der erfindungsgemässen Ausbildung der Schnellverbindung das erste Rohrende als Extrusions-Blasformteil aus Kunststoff ausgebildet sein, weil an ihm ausser dem ersten äusseren Rastvorsprung und ggf. der genannten Dichtnut keine weiteren Ausbildungen vorgesehen sein brauchen. Sowohl der äussere Rastvorsprung als auch die Dichtnut müssen auch nur hinsichtlich ihrer äusseren Kontur und ggf. Oberflächenbeschaffenheit bestimmte vorgegebene Genauigkeitsanforderungen erfüllen, was beim Blasformen in eine äussere Blasform hinein ohne weiteres zu erfüllen ist. Zudem sind diese Ausformungen meistens rotationssymmetrisch.

Sofern das blasgeformte Rohr zusätzlich mit bei dieser Technik ebenfalls einfach herzustellenden Wellungen versehen wird, ist es auch flexibel und kann ggf. direkt anstelle eines Gummischlauchs eingesetzt werden. Möglich ist auch die Herstellung solcher Rohre durch kontinuierliche Wellrohrextrusion, bei der ebenfalls entsprechende Endabschnitte geformt werden können. Die Rohrenden (insbesondere das zweite Rohrende) könnten aber auch durch Spritzgiessen hergestellt sein, insbesondere wenn es sich um Stutzen an spritzgegossenen Behältern handelt (z.B. das Gehäuse eines Luftfilters).

Als Kunststoffmaterial für die Rohre bzw. das erste Rohrende sind vor allem hochviskose Thermoplaste geeignet, welche die üblichen Zusatzstoffe und/oder Verstärkungsmittel enthalten können. Diese Formmassen müssen für das Extrusionsblasformen zudem ausreichende Schmelzefestigkeit aufweisen. Je nach Verwendungszweck sind auch Wärmeformbeständigkeit und Chemikalienbeständigkeit zu beachten. Zum Beispiel kommen Polymere wie Polypropylen, Polybutylenterephthalat oder Polyphenylensulfid in Frage. Bevorzugt sind aber Polyamide wie Polyamid 6, Polyamid 66, Polyamid 11, Polyamid 12, Polyphthalamide und auch Polyamidelastomere, sowie Mischungen aus Polyamiden. Besonders bevorzugt sind spezielle Extrusionblasformtypen auf Polyamidbasis, wenn das Rohr durch Extusionsblasformen hergestellt wird.

Gemäss einer weiteren Ausbildungsart der Erfindung ist das zweite Rohrende das Ende eines Metallrohrs oder ein an einem Behälter angeformter Metallstutzen. In diesem Fall lässt sich die erwähnte Dichtfläche besonders genau herstellen.

Die neue Schnellverbindung ist aber nicht auf spezielle Materialien oder Materialpaarungen eingeschränkt. Es können auch bevorzugt beide Rohrenden aus Kunststoff oder das erste Rohrende aus Metall und das zweite aus Kunststoff sein. Denkbar ist auch eine solche Verbindung für zwei Metall-Rohrenden.

Vor allem kann durch direkte Verbindung eines flexiblen, extrusions-blasgeformten Rohres mit einem Metallstutzen oder Kunststoffrohr eine für den Einsatz im Automobilbau sehr interessante, einfache, kompakte, leichte, bedien- und montagefreundliche sowie schliesslich auch noch kostengünstige Rohrverbindung realisiert werden.

Als weiterer Vorteil kann angeführt werden, dass die erfindungsgemässe Schnellverbindung nicht auf kleine Durchmesser beschränkt, sondern auch für grosse Durchmesser, wie sie beispielsweise für Luftkanäle benötigt werden, besonders geeignet ist, weil an den beiden Rohrenden keine komplizierten Teile oder Ausbildungen vorgesehen sein müssen und das Doppel-Verbindungs-Element sehr kompakt gestaltbar ist. Dank des erfindungsgemässen Doppel-Verbindungs-Elements ist also eine einfache, vorteilhafte Geometrie der beiden Rohrenden möglich.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Schnellverbindung nach der Erfindung mit einem Doppel-Verbindung-Element, in geschnittener Darstellung; und
- Fig. 2: das Doppel-Verbindungs-Element von Fig. 1 in perspektivischer Darstellung.

### WEGE ZUR AUSFÜHRUNG DER ERFINDUNG

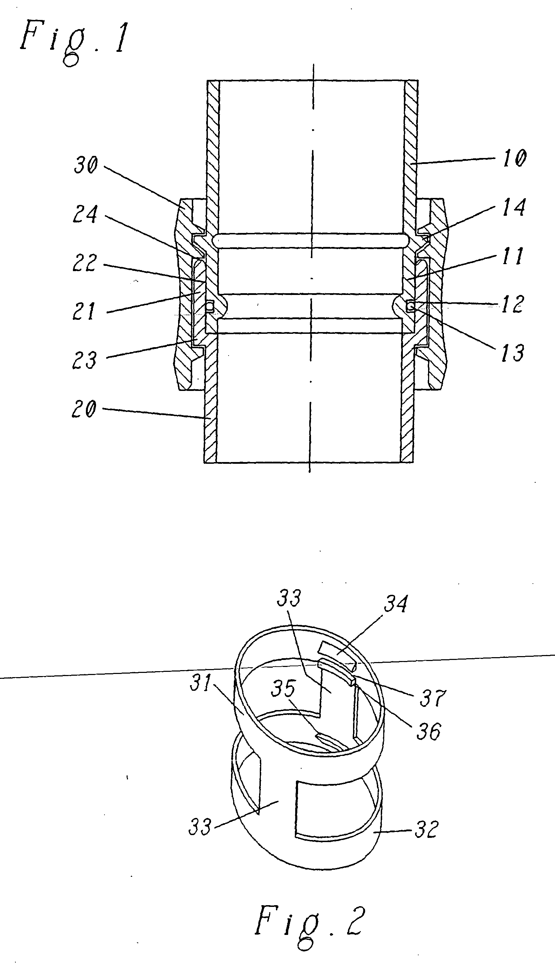

In Figur 1 ist mit 10 ein erstes und mit 20 ein zweites Rohrende bezeichnet, bei welchen es sich z.B. um Abschnitte von Kraftstoffleitungen oder auch von Luftkanälen handeln kann, wie sie z.B. im Automobilbau eingesetzt werden. Zumindest bei einem der beiden Rohrenden kann es sich aber auch um einen Abschnitt eines Stutzens handeln, der an einem Behälter angesetzt ist. Im Folgenden wird bezüglich des Rohrendes 10 beispielhaft angenommen, dass es sich dabei um einen Abschnitt eines flexiblen Rohres eines Luftkanals aus einem Kunststoffmaterial mit einem Durchmesser handelt, der bevorzugt im Bereich von 30 - 70 mm liegt. Das Rohrende 20 soll demgegenüber ein Abschnitt eines Stutzens eines Behälters aus Metall oder Kunststoff sein. Diese Annahmen sind aber wie gesagt nur beispielhaft und ohne Einschränkungen auf die Erfindung, was für alle Angaben zu den Figuren und auch für die Figurendetails gilt.

Ein Endabschnitt 11 des erstes Rohrendes 10 ist in einen Endabschnitt 21 des zweiten Rohrendes 20 eingesteckt. Der Endabschnitt 21 ist hierzu erweitert, wobei die Erweiterung aus nachstehend noch erläuterten Gründen stufenförmig ausgeführt ist.

Die Innenfläche 22 des Endabschnitts 21 ist als glatte Dichtfläche ausgebildet. An dem Endabschnitt 11 ist demgegenüber aussenseitig eine umlaufende Dichtnut 12 für eine O-Ring-Dichtung 13 vorgesehen. Die O-Ring-Dichtung 13 dichtet in der Dichtnut 12 und gegen die Innenfläche 22 und damit den Spalt zwischen den beiden ineinandergesteckten Endabschnitten 11 und 12 ab.

Zusammengehalten werden die beiden Rohrenden 10, 20 durch ein Doppel-Verbindungs-Element 30. Dieses umfasst auf der Seite des ersten Rohrendes 10 einen ersten elastisch deformierbaren Ring 31 und auf der Seite des zweiten Rohrendes 20 einen zweiten elastisch deformierbaren Ring 32. Die beiden Ringe 31 und 32 sind über zwei einander diametral gegenüberliegend angeordnete Federarme 33 miteinander verbunden. Dort wo die Federarme 33 mit den Ringen 31 und 32 verbunden sind, sind an den Ringen 31 und 32 (ggf. auch an den Enden der Federarme) innenseitig innere Rastnocken vorgesehen und zwar am ersten Ring 31 erste innere Rastnocken 34 und am zweiten Ring 32 zweite innere Rastnocken 35. Die Rastnocken 34 und 35 sind auf ihren einander zugewandten Seiten jeweils mit in Querschnittsebenen des Doppel-Verbindungs-Elements ausgerichteten Rastflächen und auf ihren voneinander abgewandeten Seiten jeweils mit demgegenüber schrägen Ablenkflächen versehen. Parallel zu den ersten Rastnocken 34 und mit geringem Abstand von diesen sind unter Ausbildung von Eingriffsnuten 37 am ersten Ring 31 innenseitig noch zwei weitere Rastnocken 36 angeformt.

Fig. 1 zeigt die erfindungsgemässe Schnellverbindung im verbundenen Zustand. In diesem Zustand ist die Verbindung gegen unbeabsichtigtes Lösen unter der Wirkung von axial wirkenden Abzugskräften gesichert. Die beiden Rohrenden können in diesem Zustand bei Bedarf jedoch gegeneinander verdreht werden (wenn sie rotationssymetrisch geformt sind), wobei aber das Zusammenfügen in der Regel schon von Anfang an in der richtigen Winkelposition erfolgt.

In gewissen Fällen ist ein exaktes Zusammenfügen ohne Möglichkeit des Verdrehens gewünscht. Dies kann erreicht werden durch eine nicht rotationssymmetrische Gestaltung der Rohrenden, so dass das Verdrehen durch einen Formschluss unterbunden ist, bzw. die Rohrenden gegen Verdrehung gesichert sind.

Zum Zusammenfügen der erfindungsgemässen Verbindung wird in einem ersten Schritt z.B. das erste Rohrende 10 in das (dabei festgehaltene) Doppel-Verbindungs-Element 30 auf der Seite des ersten Rings 31 eingeschoben. Sobald der erste Rastvorsprung 14 mit der Ablenkfläche der ersten Rastnocken 34 in Berührung kommt, werden diese bei der weiteren Bewegung unter Deformation des ersten Rings 31 und unter Deformation der beiden Federarme 33 auseinandergebogen, bis sie hinter dem Rastvorsprung 14 zurückfedern und einschnappen können. Der Rastvorsprung 14 kommt dabei auch in Eingriff in die Eingriffsnuten 37, wodurch das erste Rohrende 31 nicht weiter vorgeschoben werden kann. In dieser Postition sind das erste Rohrende 10 und das Doppel-Verbindungs-Element 30 relativ zueinander festgelegt. Man könnte auch sagen, dass das Doppel-Verbindungs-Element auf dem ersten Rohrende vormontiert ist.

Als zweiter Schritt zur Herstellung der Verbindung wird das zweite Rohrende 20 in umgekehrter Richtung und unter Aufnahme des ersten Rohrendes 10 bzw. dessen Endabschnitts 11 in das Doppel-Verbindungs-Element 30 eingesteckt, bis die zweiten inneren Rastnocken 35 am zweiten Ring 32 auf die im Zusammenhang mit dem ersten Rohrende bereits beschriebene Art in der Steckrichtung hinter dem zweiten äusseren Rastvorsprung 23 des zweiten Rohrendes 20 einschnappen. Mit seinem Stirnrand 24 kommt das zweite Rohrende 20 dabei gleichzeitig in Anschlag an die weiteren Rastnocken 36, welche damit auch die weitere Steckbewegung des zweiten Rohrendes 20 nach dem Einschnappen begrenzen. Durch die O-Richtung-Dichtung wird unmittelbar eine Abdichtung der beiden Rohrenden 10, 20 gegen aussen erreicht.

Es soll hier aber ausdrücklich darauf hingewiesen werden, dass das Zusammenfügen der erfindungsgemässen Verbindung gerade so gut auch in umgekehrter Reihenfolge geschehen kann. D.h. in einem ersten Schritt kann auch das Doppel-Verbindungselement 30 mit dem Ring 32 auf das zweite Rohrende 20 geschoben und in einem zweiten Schritt das erste Rohrende 10 eingesteckt werden.

Lösen lässt sich die erfindungsgemässe Verbindung wahlweise am ersten 31 oder am zweiten Ring 32 und zwar dadurch, dass der jeweilige Ring durch Druckausübung zwischen den Rastnocken so stark deformiert wird, dass die an ihm vorhandenen inneren Rastnocken ausser Eingriff mit dem jeweiligen Rastvorsprung kommen, den sie hintergreifen. Gegebenenfalls kann auch ein Werkzeug zum Spreizen der Federarme oder des Rings im Bereich der Rastnocken verwendet werden, z.B. eine Spreizzange, die vom axialen Ende des Rings her angesetzt wird. Anschliessend kann das dem jeweiligen Ring zugeordnete Rohrende aus dem Doppel-Verbindungs-Element 30 herausgezogen werden.

Das Doppel-Verbindungs-Element 30 ist verhältnismässig kompakt und wird bevorzugt als Kunststoff-Spritzgussteil hergestellt.

Das erste Rohrende 10 bzw. das gesamte damit zusammenhängende Teil kann durch Extrusions-Blasformen hergestellt werden. Dabei wird das Rohr nach dem Extrudieren, solange es noch weich und formbar ist, unter Innendruck in eine äussere Form hinein erweitert, welche im vorliegenden Fall zumindest die entsprechenden Konturen in Form einer Rippe für den ersten Rastvorsprung 14 und in Form einer Dichtnut 12 aufweisen muss.

Die erfindungsgemäss Schnellverbindung, bestehend aus den beiden Rohrenden und dem Doppel-Verbindungs-Element, wird besonders bevorzugt als Luftkanalverbindung für den Ansaug- oder Ladebereich eines Automobilmotors eingesetzt. Vom Ladebereich wird bei Turbolader-Motoren gesprochen.

### BEZEICHNUNGSLISTE

- 10: erstes Rohrende
- 11: Endabschnitt des ersten Rohrendes
- 12: Dichtnut
- 13: Dichtungselement (z.B. O-Ring-Dichtung)
- 14: erster äusserer Rastvorsprung am ersten Rohrende 10
- 20: zweites Rohrende
- 21: Endabschnitt des zweiten Rohrendes 20
- 22: Innenfläche des Endabschnitts 21
- 23: zweiter äusserer Rastvorsprung am zweiten Rohrende 20
- 24: Stirnrand des zweiten Rohrendes
- 30: Doppel-Verbindungs-Element
- 31: erster elastisch deformierbarer Ring
- 32: zweiter elastisch deformierbarer Ring
- 33: Federarme
- 34: erste innere Rastnocken
- 35: zweite innere Rastnocken
- 36: weitere innere Rastnocken
- 37: Eingriffsnut

## Patentansprüche

1. Schnellverbindung zweier Rohrenden zum dichten und lösbaren Verbinden des ersten Rohrendes (10) mit dem zweiten Rohrende (20), mit Federarmen (33), mit einem ersten äusseren Rastvorsprung (14) am ersten Rohrende (10), mit einem ersten mit den Federarmen (33) verbundenen elastisch deformierbaren Ring (31), und mit zwei ersten mit dem ersten äusseren Rastvorsprung (14) zusammenwirkenden inneren Rastnocken (34) an dem ersten Ring (31), **gekennzeichnet durch** einen zweiten äusseren Rastvorsprung (23) am zweiten Rohrende (20), einen zweiten mit den Federarmen (33) mit Abstand vom ersten Ring (31) verbundenen elastisch , deformierbaren Ring (32), und **durch** zwei zweite mit dem zweiten äusseren Rastvorsprung (23) zusammenwirkende innere Rastnocken (35) an dem zweiten Ring (32).

2. Schnellverbindung nach Anspruch 1, **dadurch gekennzeichnet, dass** die Federarme (33), die mit ihnen verbundenen Ringe (31, 32) sowie die an diesen vorhandenen inneren Rastnocken (34, 35) ein Doppel-Verbindungs-Element (30) bilden.

3. Schnellverbindung nach Anspruch 2, **dadurch gekennzeichnet, dass** das Doppel-Verbindungs-Element (30) als Kunststoff-Spritzgussteil hergestellt ist.

4. Schnellverbindung nach Anspruch 3, **dadurch gekennzeichnet, dass** für das Kunststoff-Spritzgussteil als Kunststoffmaterial ein verstärktes Polyamid verwendet ist.

5. Schnellverbindung nach Anspruch 4, **dadurch gekennzeichnet, dass** das Polyamid ausgewählt ist aus der Gruppe Polyamid 6, Polyamid 66, Polyamid 46, Polyamid 11, Polyamid 12 und partiell aromatische teilkristalline Copolyamide.

6. Schnellverbindung nach Anspruch 4 oder 5, **dadurch gekennzeichnet, dass** Fasern und/oder Mineralien als Verstärkungsmittel für das Polyamid verwendet sind.

7. Schnellverbindung nach Anspruch 6, **dadurch gekennzeichnet, dass** die Fasern ausgewählt sind aus der Gruppe Glasfasern, Kohlenstofffasern und Aramidfasern.

8. Schnellverbindung nach einem der Ansprüche 1-7, **dadurch gekennzeichnet, dass** parallel und mit Abstand zu den ersten inneren Rastnocken (34) am ersten Ring (31) unter Ausbildung einer Eingriffsnut (37) für den ersten äusseren Rastvorsprung (14) am ersten Rohrende (10) zwei weitere innere Rastnocken (36) vorgesehen sind.

9. Schnellverbindung nach einem der Ansprüche 1-8, **dadurch gekennzeichnet, dass** die beiden Rohrenden (10, 20) bzw. Endabschnitte (11, 21) von diesen ineinander steckbar sind.

10. Schnellverbindung nach Anspruch 9, **dadurch gekennzeichnet, dass** ein Endabschnitt (21) des zweiten Rohrendes (20) zur Aufnahme eines Endabschnittes (11) des ersten Rohrendes (10) stufig erweitert ist und dass die stufige Erweiterung den zweiten äusseren Rastvorsprung (23) bildet.

11. Schnellverbindung nach Anspruch 9 oder 10, **dadurch gekennzeichnet, dass** der Endabschnitt (21) des zweiten Rohrendes (20) innenseitig mit einer Dichtfläche (22) versehen ist.

12. Schnellverbindung nach einem der Ansprüche 9,10 oder 11, **dadurch gekennzeichnet, dass** an dem Endabschnitt (11) des ersten Rohrendes (10) aussenseitig mindestens eine umlaufende Dichtnut (12) für mindestens ein Dichtungselement (13) vorgesehen ist, bei dem es sich vorzugsweise um einen O-Ring, eine Dichtschnur oder eine Lippendichtung handelt.

13. Schnellverbindung nach einem der Ansprüche 1 - 12, **dadurch gekennzeichnet, dass** das erste und/oder das zweite Rohrende aus Kunststoff besteht.

14. Schnellverbindung nach Anspruch 13, **dadurch gekennzeichnet, dass** der Kunststoff ausgewählt ist aus der Gruppe Polypropylen, Polybutylenterephthalat, Polyphenylensulfid und Polyamide, wobei diese Polymere vorzugsweise auch noch Zusatzstoffe und/oder Verstärkungsmittel enthalten.

15. Schnellverbindung nach Anspruch 14, **dadurch gekennzeichnet, dass** die Polyamide die Gruppe Polyamid 6, Polyamid 66, Polyamid 11, Polyamid 12, Polyphthalamide, Polyamidelastomere und Polyamid-Mischungen umfassen.

16. Schnellverbindung nach einem der Ansprüche 13-15, **dadurch gekennzeichnet, dass** das erste Rohrende (10) ein Extrusionsblasformteil ist.

17. Schnellverbindung nach einem der Ansprüche 13-15, **dadurch gekennzeichnet, dass** das erste Rohrende (10) ein Teil eines kontinuierlich extrudierten Wellrohres ist.

18. Schnellverbindung nach einem der Ansprüche 13 - 15, **dadurch gekennzeichnet, dass** das zweite Rohrende (20) ein Spritzgussteil, insbesondere ein Stutzen an einem spritzgegossenen Behälter ist.

19. Schnellverbindung nach einem der Ansprüche 1 - 17, **dadurch gekennzeichnet, dass** das zweite Rohrende (20) ein Metallteil, insbesondere ein Metallstutzen ist.

20. Schnellverbindung nach einem der Ansprüche 1 - 19, **dadurch gekennzeichnet, dass** der Durchmesser der beiden Rohrenden (10, 20) im Bereich von 30 bis 70 mm liegt.

21. Schnellverbindung nach einem der vorhergehenden Ansprüche, **dadurch gekennzeichnet, dass** die beiden Rohrenden (10, 20) rotationssymmetrisch geformt sind.

22. Schnellverbindung nach einem der Ansprüche 1 - 20, **dadurch gekennzeichnet, dass** die beiden Rohrenden (10, 20) durch nicht rotationssymmetrische Gestaltung gegen Verdrehung gesichert sind.

23. Schnellverbindung nach einem der vorhergehenden Ansprüche, **dadurch gekennzeichnet, dass** sie eine Luftkanalverbindung für den Ansaug- oder Ladebereich eines Automobilmotors bilden kann.

## Claims

1. Quick-acting connection of two pipe ends for tight and detachable joining of the first pipe end (10) with the second pipe end (20), with spring arms (33), with a first outer detent projection (14) at the first pipe end (10), with a first elastically deformable ring (31) connected with the spring arms (33), and with two first inner detent cams (34) on the first ring (31) that interact with the first outer detent projection (14), **characterised by** a second outer detent projection (23) at the second pipe end (20), a second elastically deformable ring (32) connected with the spring arms (33) at a distance from the first ring (31), and by two second inner detent cams (35) on the second ring (32) that interact with the second outer detent projection (23).

2. Quick-acting connection according to claim 1, **characterised in that** the spring arms (33), the rings connected with them (31, 32) and the inner detent cams (34, 35) present on said rings form a dual connection element (30).

3. Quick-acting connection according to claim 2, **characterised in that** the dual connection element (30) is manufactured as a plastic injection-moulded part.

4. Quick-acting connection according to claim 3, **characterised in that** a reinforced polyamide is used for the plastic injection-moulded part as a plastic material.

5. Quick-acting connection according to claim 4, **characterised in that** the polyamide is selected from the group of polyamide 6, polyamide 66, polyamide 46, polyamide 11, polyamide 12 and partially aromatic semicrystalline copolyamides.

6. Quick-acting connection according to claim 4 or 5, **characterised in that** fibres and/or minerals are used as a reinforcing agent for the polyamide.

7. Quick-acting connection according to claim 6, **characterised in that** the fibres are selected from the group of glass fibres, carbon fibres and aramid fibres.

8. Quick-acting connection according to one of claims 1 to 7, **characterised in that** two additional inner detent cams (36) are provided in parallel and at a distance from the first inner detent cams (34) on the first ring (31) with formation of an engaging groove (37) for the first outer detent projection (14) at the first pipe end (10).

9. Quick-acting connection according to one of claims 1 to 8, **characterised in that** the two pipe ends (10, 20) and end sections (11, 21) thereof can be plugged into each other.

10. Quick-acting connection according to claim 9, **characterised in that** an end section (21) of the second pipe end (20) is expanded in a stepped manner in order to accommodate an end section (11) of the first pipe end (10) and that the stepped expansion forms the second outer detent projection (23).

11. Quick-acting connection according to claim 9 or 10, **characterised in that** the end section (21) of the second pipe end (20) is provided with a sealing face (22) on the inside.

12. Quick-acting connection according to one of claims 9, 10 or 11, **characterised in that** at least one surrounding sealing groove (12) is provided on the end section (11) of the first pipe end (10) on the outside for at least one sealing element (13), which is preferably an O-ring, a sealing cord or a lip seal.

13. Quick-acting connection according to one of claims 1 to 12, **characterised in that** the first and/or second pipe end is made of plastic.

14. Quick-acting connection according to claim 13, **characterised in that** the plastic is selected from the group of polypropylene, polybutylene terephthalate, polyphenylene sulphide and polyamides, these polymers preferably also containing additives and/or reinforcing agents.

15. Quick-acting connection according to claim 14, **characterised in that** the polyamides cover the group of polyamide 6, polyamide 66, polyamide 11, polyamide 12, polyphthalamides, polyamide elastomers and polyamide mixtures.

16. Quick-acting connection according to one of claims 13 to 15, **characterised in that** the first pipe end (10) is an extrusion blow-moulded part.

17. Quick-acting connection according to one of claims 13 to 15, **characterised in that** the first pipe end (10) is part of a continuously extruded corrugated pipe.

18. Quick-acting connection according to one of claims 13 to 15, **characterised in that** the second pipe end (20) is an injection-moulded part, in particular a nozzle on an injection-moulded container.

19. Quick-acting connection according to one of claims 1 to 17, **characterised in that** the second pipe end (20) is a metal part, in particular a metal nozzle.

20. Quick-acting connection according to one of claims 1 to 19, **characterised in that** the diameter of the two pipe ends (10, 20) is in the range of 30 to 70 mm.

21. Quick-acting connection according to one of the preceding claims, **characterised in that** the two pipe ends (10, 20) are shaped in a rotationally symmetrical manner.

22. Quick-acting connection according to one of claims 1 to 20, **characterised in that** the two pipe ends (10, 20) are secured against rotating by means of a non-rotationally symmetrical design.

23. Quick-acting connection according to one of the preceding claims, **characterised in that** it can form an air duct connector for the intake or charging area of a car engine.

## Revendications

1. Raccord à action rapide pour deux extrémités de tubes, pour l'assemblage étanche et amovible de la première extrémité de tube (10) avec la seconde extrémité de tube (20) comprenant des bras élastiques (33), une première saillie de verrouillage extérieure (14) prévue à la première extrémité de tube (10), un premier anneau élastiquement déformable (31) relié aux bras élastiques (33), et deux premières cames de verrouillage internes (34) prévues sur le premier anneau (31) coopérant avec la première saillie de verrouillage extérieure (14), **caractérisé par** une seconde saillie extérieure (23) prévue sur la seconde extrémité de tube (20), un second anneau élastiquement déformable (32) relié aux bras élastiques (33) et distant du premier anneau (31) et par deux secondes cames de verrouillage internes (35) prévues sur le second anneau (32) qui coopèrent avec la seconde saillie de verrouillage extérieure (23).

2. Raccord à action rapide selon la revendication 1, **caractérisé en ce que** les bras élastiques (33) forment, avec les anneaux (31, 32) reliés à eux ainsi qu'avec les cames de verrouillage (34, 35) qu'ils présentent, un élément d'assemblage double (30).

3. Raccord à action rapide selon la revendication 2, **caractérisé en ce que** l'élément d'assemblage double (30) est fabriqué en tant que pièce moulée par injection de matière plastique.

4. Raccord à action rapide selon la revendication 3, **caractérisé en ce que** pour la pièce moulée par injection, on utilise en tant que matière plastique un polyamide renforcé.

5. Raccord à action rapide selon la revendication 4, **caractérisé en ce que** le polyamide est choisi parmi les groupes polyamide 6, polyamide 66, polyamide 46, polyamide 11, polyamide 12 et les copolyamides partiellement aromatiques et partiellement cristallins.

6. Raccord à action rapide selon la revendication 4 ou 5, **caractérisé en ce que** des fibres et/ou des charges minérales sont utilisées en tant qu'agent de renforcement.

7. Raccord à action rapide selon la revendication 6, **caractérisé en ce que** les fibres sont choisies parmi les groupes fibres de verre, fibres de carbone et fibres d'aramide.

8. Raccord à action rapide selon l'une des revendications 1 à 7, **caractérisé en ce que** parallèlement et à distance des premières cames de verrouillage internes (34), sont prévues sur le premier anneau (31) deux autres cames de verrouillage interne (36) pour former une gorge de retenue (37) pour la première saillie de verrouillage extérieure (14) prévue sur la première extrémité de tube (10).

9. Raccord à action rapide selon l'une des revendications 1 à 8, **caractérisé en ce que** des deux extrémités de tube (10, 20) de préférence, les sections d'extrémités (11, 21) sont emboîtables l'une dans l'autre.

10. Raccord à action rapide selon la revendication 9, **caractérisé en ce qu'**une section d'extrémité (21) de la seconde extrémité de tube (20) est élargie de façon étagée pour la réception d'une section d'extrémité (11) de la première extrémité de tube (10) et **en ce que** l'élargissement étagé forme la première saillie de verrouillage extérieure (23).

11. Raccord à action rapide selon la revendication 9 ou 10, **caractérisé en ce que** la section d'extrémité (21) de la seconde extrémité de tube (20) est prévue d'une surface d'étanchéité sur sa face interne.

12. Raccord à action rapide selon l'une des revendications 9, 10 ou 11, **caractérisé en ce qu'**à la section d'extrémité (11) de la première extrémité de tube (10), est prévue, sur son côté extérieur, au moins une gorge d'étanchéité (12) périphérique pour au moins un élément d'étanchéité (13) constitué de préférence par un joint torique, un lien d'étanchéité ou une lèvre d'étanchéité.

13. Raccord à action rapide selon l'une des revendications 1 à 12, **caractérisé en ce que** la première et/ou la seconde extrémité de tube est (sont) en matière synthétique.

14. Raccord à action rapide selon la revendication 13, **caractérisé en ce que** la matière synthétique est choisie parmi le groupe polyéthylène térephtalate de polybutylène, sulfure de polyéthylène et polyamide, ces polymères renfermant de préférence également des composés d'addition et/ou un agent de renforcement.

15. Raccord à action rapide selon la revendication 14, **caractérisé en ce que** le polyamide englobe le groupe polyamide 6, polyamide 66, polyamide 11, polyamide 11, polyamide 12, polyphtalamide, élastomères polyamide et mélange de polyamides.

16. Raccord à action rapide selon l'une des revendications 13 à 15, **caractérisé en ce que** la première extrémité de tube (10) est une partie moulée, extrudée et soufflée.

17. Raccord à action rapide selon l'une des revendications 13 à 15, **caractérisé en ce que** la première extrémité de tube (10) est une partie d'un tube extrudé en continu.

18. Raccord à action rapide selon l'une des revendications 13 à 15, **caractérisé en ce que** la seconde extrémité de tube (20) est une partie moulée par injection, en particulier un embout d'un récipient moulé par injection.

19. Raccord à action rapide selon l'une des revendications 1 à 17, **caractérisé en ce que** la seconde extrémité de tube (20) est une pièce en métal, en particulier un embout métallique.

20. Raccord à action rapide selon l'une des revendications 1 à 19, **caractérisé en ce que** le diamètre des deux extrémités de tube (10, 20) est compris dans l'intervalle de 30 à 70 mm.

21. Raccord à action rapide selon l'une des revendications précédentes, **caractérisé en ce que** les deux extrémités de tube (10, 20) sont formées symétriquement par rotation.

22. Raccord à action rapide selon l'une des revendications 1 à 20, **caractérisé en ce que** les deux extrémités de tube (10, 20) sont bloquées en rotation par conformation non symétrique en rotation.

23. Raccord à action rapide selon l'une des revendications précédentes, **caractérisé en ce qu'**il peut constituer un raccord de canal d'air pour l'admission ou la zone de charge d'un moteur d'automobile.
